# EUROPEAN PATENT APPLICATION

(11) **EP 3 228 918 A1**
(43) Date of publication of application: **11.10.2017**
(21) Application number: 16163805.1
(22) Date of filing: 05.04.2016
(51) Int. Cl.: F16P 1/02, F01D 11/00, F01D 25/24

(54) **GUARD DEVICE**

(71) Applicant: Siemens Aktiengesellschaft, 80333 München (DE)
(72) Inventor: Gerritzen, Thomas, 7577 JA Oldenzaal (NL)

(57) **Abstract**

The invention relates to a guard device (8) comprising an enclosure (10) for enclosing a first machine (4), a coupling guard (12) for covering a coupling device (20) that is prepared for connecting the first machine (4) to a second machine (6), the enclosure (10) being connected to the coupling guard (12).

In order to achieve improved operational characteristics of the guard device (8) it is proposed that the guard device (8) comprises an elastic component (32) that elastically connects the enclosure (10) to the coupling guard (12).

## Description

The invention relates to a guard device comprising an enclosure for enclosing a first machine, a coupling guard for covering a coupling device that is prepared for connecting the first machine to a second machine, the enclosure being connected to the coupling guard.

Machines, particularly rotating machines, are in many cases arranged within an enclosure. The enclosure may serve different purposes, such as reducing noise emission of the enclosed machine, providing a pressurized surrounding for the enclosed machine and/or protecting the enclosed machine against impurities.

Furthermore, a machine that is enclosed by an enclosure is often connected to another machine that, for instance, drives the enclosed machine or is driven by the enclosed machine, the connection between the two machines being realised by means of a coupling device. In many cases, the coupling device is covered by a coupling guard, which e.g. protects the coupling device against impurities.

The coupling guard may be guided through an opening of the enclosure such that the coupling guard is arranged sectionally within the enclosure and sectionally outside the enclosure. In order for the enclosure to fulfil its function, i.e. for instance reducing noise emission of the enclosed machine, providing a pressurized surrounding for the enclosed machine and/or protecting the enclosed machine from impurities, the enclosure is connected to the coupling guard, particularly with the purpose of closing/sealing the enclosure at its opening.

An objective of the invention is to provide a guard device of the type mentioned at the beginning that exhibits improved operational characteristics.

According to the invention, this objective is accomplished by means of a guard device with the features of claim 1.

The guard device according to the invention comprises an enclosure for enclosing a first machine, a coupling guard for covering a coupling device that is prepared for connecting the first machine to a second machine, the enclosure being connected to the coupling guard. Furthermore, the guard device according to the invention comprises an elastic component that elastically connects the enclosure to the coupling guard.

The invention is based on the finding that, if rigid elements are used to connect the enclosure to the coupling guard, a displacement of the enclosure can induce a displacement of the coupling guard due to the rigid mechanical coupling. Therefore, thermal expansions and/or production tolerances may lead to a mechanical deformation of the enclosure and/or the coupling guard, if rigid elements are used to connect the enclosure to the coupling guard. This can induce high mechanical stresses in the enclosure and/or the coupling guard and even lead to mechanical failure and/or leakage between the enclosure and the coupling guard.

By employing an elastic component that elastically connects the enclosure to the coupling guard, the enclosure and the coupling guard may freely change their relative position due to an elastic deformation of the elastic component. The elastic component allows for a displacement of an enclosure wall, at which the elastic component is arranged, up to several millimetres, preferentially up to 20 mm, in axial and/or radial direction relative to the coupling guard without inducing a displacement and/or deformation of the coupling guard, while advantageously at the same time sealing the enclosure wall. Or in other words, it can be achieved with the aid of the elastic component that a possible displacement of the enclosure, or rather, of one of its walls is independent/decoupled of a possible displacement of the coupling guard. The elastic component may compensate a displacement of the enclosure so that this displacement does not induce a displacement of the coupling guard, or vice versa, the elastic component may compensate a displacement of the coupling guard so that this displacement does not induce a displacement of the enclosure. Mechanical stresses in the enclosure and/or the coupling guard, mechanical failure of these element and/or leakage between them can thus be avoided. Therefore, improved operational characteristics can be achieved.

The terms "axial" and "radial" may be understood with respect to a symmetry axis of the coupling guard according to their usual meaning.

A component may be considered as an elastic component in accordance with the invention, if the component comprises a material with a young's modulus of at most 1 GPa.

The elastic component may connect the enclosure to the coupling guard immediately, i.e. without interposition of another element between the enclosure and the coupling guard. Alternatively, the elastic component may connect the enclosure to the coupling guard mediately, i.e. with interposition of another element between the enclosure and the coupling guard. In the latter case, more room for mounting other parts at the coupling guard can be provided since the coupling guard does not need to be mounted directly to the enclosure.

Advantageously, the elastic component is positioned such that at least a section of the elastic component is movable with respect to the coupling guard.

Aforementioned enclosure may, for instance, be an acoustic enclosure. Thus, the enclosure may particularly serve the purpose of reducing noise emissions of the first machine.

The coupling guard may cover the coupling device at least sectionally/partially. Further, the coupling guard may be shaped axially symmetrically or at least basically axially symmetrically.

Preferably, the elastic component is a seal. The seal, i.e. the elastic component, expediently seals the enclosure. It is particularly preferred, if the seal seals the enclosure gas tightly. In this manner, the elastic component allows for developing and maintaining pressurized conditions within the enclosure.

The seal may, for instance, be a type of seal that is used to seal doors (door seal). Such types of seals are widely and cost-effectively available.

Moreover, the enclosure expediently comprises an opening, through which the coupling guard is guided. That is, this opening may be a feedthrough for the coupling guard.

The elastic component preferentially seals the enclosure at said opening. The elastic component may cover said opening at least partially.

Expediently, said opening of the enclosure is a circular opening. In an advantageous embodiment of the invention, the enclosure comprises two seal plates, in particular metallic seal plates. Expediently, the seal plates are mounted to a wall of the enclosure, for instance by means of bolts. Further, each of both seal plates preferentially comprises a semicircular recess. Advantageously, the two seal plates are arranged such that their recesses form the circular opening of the enclosure.

Preferably, the coupling guard is arranged sectionally within the enclosure and sectionally outside the enclosure.

It is preferred, if the elastic component comprises a material that has a young's modulus of at most 0.1 GPa, in particular a young's modulus between 0.01 and 0.1 GPa. This allows for a particularly efficient decoupling of a possible displacement of the enclosure and a possible displacement of the coupling guard.

Expediently, the elastic component comprises an elastomeric material, such as rubber, in particular EPDM rubber.

Preferentially, the elastic component exhibits a portion with a U-shaped profile (U-shaped cross-section). Said portion advantageously embraces (at least sectionally) a rim of an opening of the enclosure, particularly aforementioned circular opening of the enclosure. In this manner, an effective sealing performance may be realised at the opening.

Also, it is advantageous, if the portion with the U-shaped profile comprises a clamp, particularly a metal clamp. Said clamp expediently has a U-shaped profile. Moreover, the clamp may be cast in an elastomeric material, such as rubber. Preferentially, the elastic component is clamped against the rim of the circular opening of the enclosure by means of the clamp. In this manner, the elastic component may be easily and reliably attached to the rim of the opening.

Furthermore, the coupling guard may comprise a first guard unit and a second guard unit. Expediently, each of the two guard units comprises an annular flange. Besides, it is expedient, if both guard units are shaped axially symmetrically or at least basically axially symmetrically.

Preferentially, the first guard unit is arranged coaxially and/or axially offset with respect to the second guard unit. Also, it is expedient, if both guard units are connected to one another at their respective flange, e.g. by means of bolts.

At least one of the two guard units, preferably each of both guard units, may comprise two half shells that are connected to another, for instance by means of bolts. This enables easy (dis-)assembly of the coupling guard, particularly since the two guard units may be approached to the coupling device or removed from the coupling device from opposite directions.

The flange of the first guard unit may, for instance, extend radially outwards. The flange of the second guard unit may, on the other hand, extend radially inwards. Advantageously, these two flanges are in contact with each other at their respective rear side. The rear side of the respective flange may be understood as the side opposite to the face side of the flange. Further, a liquid sealant can be provided between these two flanges.

Alternatively, both, the flange of the first guard unit and the flange of the second guard unit, may extend radially outwards. In the latter case, it is expedient, if these two flanges are in contact with each other at their respective face side.

In a preferred embodiment of the invention, the guard device comprises a seal cartridge. Preferentially, the seal cartridge is coaxially arranged with respect to the coupling guard.

Furthermore, it is advantageous, if the elastic component comprises a seal lip. The seal lip is expediently in contact with the seal cartridge. The aforementioned decoupling of a possible displacement of the enclosure from a possible displacement of the coupling guard may particularly be achieved by means of the seal lip.

Advantageously, the seal lip comprises an elastomeric material, or rather, is made of an elastomeric material. Furthermore, the seal lip is expediently dimensioned such that it is pressed against the seal cartridge, for instance by at least one of the aforementioned seal plates. Also, it is advantageous, if the seal lip is moveable axially and/or radially with respect to the seal cartridge.

Besides, the seal cartridge preferentially comprises a ring-shaped shell. Further, the seal cartridge expediently comprises an annular flange. The flange of the seal cartridge and the ring-shaped shell of the seal cartridge may, for instance, be formed in one piece or may be connected to one another in different manner.

Expediently, the flange of the seal cartridge is connected to a flange of the coupling guard, particularly to the flange of the aforementioned second guard unit. Moreover, the seal lip is advantageously in contact with the ring-shaped shell of the seal cartridge.

Furthermore, the invention relates to a machinery system comprising a guard device according the foregoing description. The machinery system expediently comprises a first machine. Also, it is expedient, if the machinery system comprises a second machine. The first machine and the enclosure can be mounted on the same base frame.

Advantageously, the machinery system exhibits a coupling device. Preferentially, this coupling device connects the first machine (mechanically) to the second machine. Expediently, the enclosure of the guard device encloses the first machine. The coupling guard of the guard device, however, expediently covers the coupling device.

Both machines may, for instance, be rotating machines. Further it is expedient, if the coupling device connects a shaft of the first machine to a shaft of the second machine.

The first machine may, for instance, be a (power) turbine or a series of interconnected turbines. The second machine may, for instance, be a compressor.

The foregoing description of advantageous embodiments of the invention contains numerous features which are partially combined with one another in the dependent claims. Expediently, these features can also be considered individually and be combined with one another into further suitable combinations. More particularly, these features can be combined with the guard device according to the independent claim individually as well as in any suitable combination.

Even if terms are used in the singular or in a specific numeral form, the scope of the invention should not be restricted to the singular or the specific numeral form. Where applicable the indefinite article "a" can be regarded as "at least one".

The above-described characteristics, features and advantages of the invention and the manner in which they are achieved can be understood more clearly in connection with the following description of an exemplary embodiment which will be explained with reference to the drawings. The exemplary embodiment is intended to illustrate the invention, but is not supposed to restrict the scope of the invention to combinations of features given therein, neither with regard to functional features. Furthermore, suitable features of the exemplary embodiment can also be explicitly considered in isolation and/or be combined with any of the appended claims.

The drawings show:
- FIG 1: a top view of a machinery system comprising a first and a second machine and a guard device with an enclosure and a coupling guard; and
- FIG 2: a cross-sectional view of a sub-section of the machinery system from FIG 1 displaying a segment of the enclosure and a segment of the coupling guard.

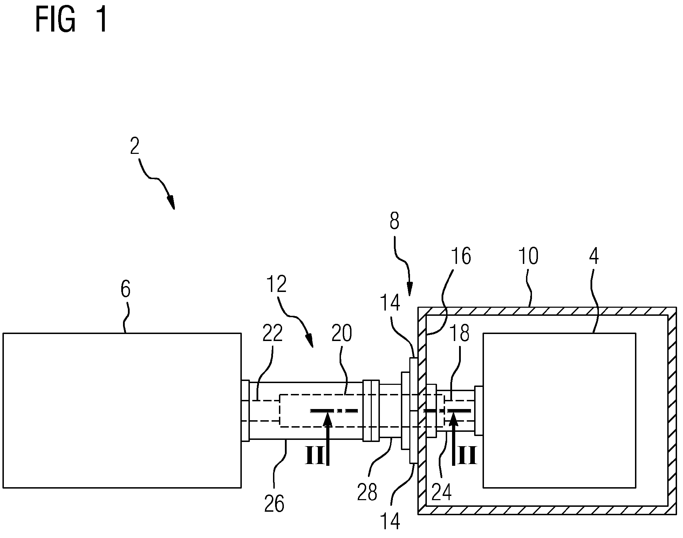

FIG 1 shows schematically a machinery system 2 from a top view. The machinery systems 2 comprises a first machine 4 and a second machine 6, both of which are rotating machines. In the present case, the first machine 4 is a turbine and the second machine 6 is a compressor.

Moreover, the machinery system 2 exhibits a guard device 8 comprising an enclosure 10 and a coupling guard 12, the enclosure 10 being shown in sectioning.

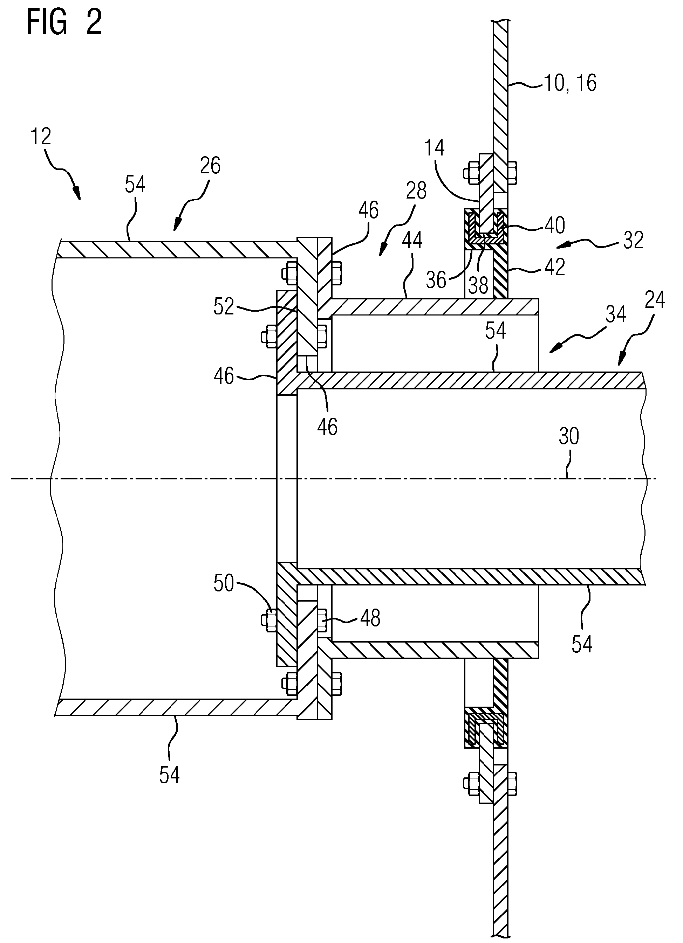

The enclosure 10 is a box-shaped acoustic enclosure and encloses the first machine 4. Furthermore, the enclosure comprises two metallic seal plates 14 that are mounted to a wall 16 of the enclosure 10 by means of bolts and nuts. Each of both seal plates 14 comprises a semicircular recess, wherein both seal plates 14 are arranged such that their recesses form a circular opening of the enclosure 10 (cf. FIG 2).

A shaft 18 of the first machine 4 is guided through said circular opening. The machinery system 2 further comprises a coupling device 20 which connects the shaft 18 of the first machine 4 to a shaft 22 of the second machine 6.

Both shafts 18, 22 as well as the coupling device 20 are covered by the aforementioned coupling guard 12. The shafts 18, 22 and the coupling device 20 are indicated by dotted lines in FIG 1 to ensure a better understanding.

The coupling guard 12 comprises a first guard unit 24 that is connected to the first machine 4 and a second guard unit 26 that is connected to the second machine 6, the guard units 24, 26 being connected to the respective machine 4, 6 particularly by means of bolts and nuts. Furthermore, both guard units 24, 26 of the coupling guard 12 are connected to one another (cf. FIG 2).

The guard device 8 further comprises a seal cartridge 28 that is connected to the second guard unit 26 of the coupling guard 12. Moreover, the coupling guard 12, particularly its first guard unit 24, and the seal cartridge 28 are guided through the aforementioned opening of the enclosure 10. Thus, the coupling guard 12 as well as the seal cartridge 28 are arranged sectionally within the enclosure 10 and sectionally outside the enclosure 10.

Besides, a sectional plane II-II is displayed in FIG 1.

FIG 2 shows a cross-section through the machinery system 2 from FIG 1 along the sectional plane II-II.

The aforementioned coupling guard 12 and the seal cartridge 28 are visible in FIG 2, wherein the two shafts 18, 22 and the coupling device 20 are not displayed in FIG 2 for the sake of clarity. Apart from that, an axis 30 is displayed, the axis 30 being the common symmetry axis of the shafts 18, 22.

Also, an elastic component 32, which is a further element of the guard device 12, is shown in FIG 2. The elastic component 32 elastically connects the enclosure 10 to the coupling guard 12. Further, the elastic component 32 seals the interior of enclosure 10 gas tightly at the aforementioned circular opening 34 of the enclosure, through which the coupling guard 12 and the seal cartridge 28 are guided. Thus, the elastic component 32 is a seal.

The elastic component 32 exhibits a portion 36 with a U-shaped profile. Said portion 36 embraces a rim 38 of the circular opening 34 of the enclosure 10.

The portion 36 with the U-shaped profile comprises a metallic clamp 40, which has a U-shaped profile and is cast in rubber, wherein the elastic component 32 is clamped against the rim 38 of said opening 34 of the enclosure 10 by means of the clamp 40.

Moreover, the elastic component 32 comprises a seal lip 42 that is in contact with the seal cartridge 28, wherein the seal lip 42 is dimensioned such that it is pressed against the seal cartridge 28 by the aforementioned seal plates 14. The seal lip 42 is made of rubber and is formed integrally with the rubber part of the U-shaped portion 36. Furthermore, the seal lip 42 is moveable axially and radially with respect to the seal cartridge 28.

The elastic component 32 allows for a displacement of the enclosure wall 16 up to 20 mm in axial and/or radial direction relative to the coupling guard 12 without inducing a displacement and/or deformation of the coupling guard 12, while at the same time sealing the enclosure wall 16 gas tightly.

The seal cartridge 28 is axially symmetric with respect to the aforementioned axis 30. Besides, the seal cartridge 28 comprises a ring-shaped shell 44 and an annular flange 46.

Also, the coupling guard 12 is axially symmetric with respect to this axis 30. As mentioned before, the coupling guard 12 comprises a first guard unit 24 and a second guard unit 26, each of which comprising an annular flange 46, wherein the first guard unit 24 is arranged coaxially as well as axially offset with respect to the second guard unit 26 and both guard units 24, 26 are connected to one another at their respective flange 46 by means of bolts 48 and nuts 50.

The flange 46 of the first guard unit 24 extends radially outwards, whereas the flange 46 of the second guard unit 24 extends radially inwards, wherein these two flanges 46 are in contact with each other at their respective rear side 52.

Further, a liquid sealant is provided between these two flanges 46.

Each of both guard units 24, 26 comprises two half shells 54 that are connected to another by means of (not shown) bolts and nuts. The half shells 54 of each of the two guard units 24, 26 have the form of a hollow cylinder that is cut at its cylinder axis, wherein the half shells are connected to each other in such a manner that the respective guard unit 24, 26 has a hollow cylindrical shape.

Moreover, the flange 46 of the seal cartridge 28 is connected with its face side to the face side of the flange 46 of the second guard unit 26.

While specific embodiments have been described in detail, those with ordinary skill in the art will appreciate that various modifications and alternatives to those details could be developed in light of the overall teachings of the disclosure. Accordingly, the particular arrangements disclosed are meant to be illustrative only and should not be construed as limiting the scope of the claims or disclosure, which are to be given the full breadth of the appended claims, and any equivalents thereof.

## Claims

1. Guard device (8) comprising an enclosure (10) for enclosing a first machine (4), a coupling guard (12) for covering a coupling device (20) that is prepared for connecting the first machine (4) to a second machine (6), the enclosure (10) being connected to the coupling guard (12), **characterised by** an elastic component (32) that elastically connects the enclosure (10) to the coupling guard (12).

2. Guard device (8) according to claim 1,
**characterised in that** the elastic component (32) is a seal that seals the enclosure (10) gas tightly.

3. Guard device (8) according to claim 1 or 2,
**characterised in that** the enclosure (10) comprises an opening (34), through which the coupling guard (12) is guided, wherein the elastic component (32) seals the enclosure (10) at said opening (34).

4. Guard device (8) according to claim 3,
**characterised in that** the opening (34) of the enclosure (10) is a circular opening and the enclosure (10) comprises two seal plates (14) that are mounted to a wall (16) of the enclosure (10), wherein each of both seal plates (14) comprises a semicircular recess and the two seal plates (14) are arranged such that their recesses form the circular opening (34) of the enclosure (10).

5. Guard device (8) according to any of the preceding claims,
**characterised in that** the coupling guard (12) is arranged sectionally within the enclosure (10) and sectionally outside the enclosure (10).

6. Guard device (8) according to any of the preceding claims,
**characterised in that** the elastic component (32) comprises an elastomeric material, such as rubber.

7. Guard device (8) according to any of the preceding claims,
**characterised in that** the elastic component (32) exhibits a portion (36) with a U-shaped profile, wherein said portion (36) embraces a rim (38) of a circular opening (34) of the enclosure (10).

8. Guard device (8) according to claim 7,
**characterised in that** the portion (36) with the U-shaped profile comprises a metal clamp (40) with a U-shaped profile, wherein the clamp (40) is cast in an elastomeric material, such as rubber, and the elastic component (32) is clamped against the rim (38) of the circular opening (34) of the enclosure (10) by means of the clamp (40).

9. Guard device (8) according to any of the preceding claims,
**characterised in that** the coupling guard (12) comprises a first guard unit (24) and a second guard unit (26), each of which comprising an annular flange (46), wherein the first guard unit (24) is arranged coaxially as well as axially offset with respect to the second guard unit (26) and both guard units (24, 26) are connected to one another at their respective flange (46).

10. Guard device (8) according to claim 9,
**characterised in that** each of both guard units (24, 26) comprises two half shells (54) that are connected to another.

11. Guard device (8) according to any of the preceding claims,
**characterised by** a seal cartridge (28) that is coaxially arranged with respect to the coupling guard (12), wherein the elastic component (32) comprises a seal lip (42) that is in contact with the seal cartridge (28).

12. Guard device (8) according to claim 11,
**characterised in that** the seal cartridge (28) comprises a ring-shaped shell (44) and an annular flange (46), wherein the flange (46) of the seal cartridge (28) is connected to a flange (46) of the coupling guard (12) and the seal lip (42) is in contact with the ring-shaped shell (44) of the seal cartridge (28).

13. Machinery system (2) comprising a guard device (8) according to any of the preceding claims, a first machine (4), a second machine (6), a coupling device (20) that connects the first machine (4) to the second machine (6), wherein the enclosure (10) of the guard device (8) encloses the first machine (4) and the coupling guard (12) of the guard device (8) covers the coupling device (20).

14. Machinery system (2) according to claim 13,
**characterised in that** both machines (4, 6) are rotating machines, wherein the coupling device (20) connects a shaft (18) of the first machine (4) to a shaft (22) of the second machine (6).

15. Machinery system (2) according to claim 13 or 14,
**characterised in that** the first machine (4) is a turbine and the second machine (6) is a compressor.
